# EUROPÄISCHE PATENTANMELDUNG

(11) **EP 0 817 134 A2**
(43) Veröffentlichungstag der Anmeldung: **07.01.1998**
(21) Anmeldenummer: 97110985.5
(22) Anmeldetag: 02.07.1997
(51) Int. Cl.: G07B 15/00

(54) **Gerät zum Ermitteln der mit einem Kraftfahrzeug zurückgelegten Wegstrecke**

(30) Priorität: 05.07.1996 DE 19627078; 18.07.1996 DE 19629002
(71) Anmelder: ROBERT BOSCH GMBH, 70442 Stuttgart (DE)
(72) Erfinder: Richter, Joannes, 71522 Backnang (DE)

(57) **Zusammenfassung**

Ein Gerät zum Ermitteln der mit einem Kraftfahrzeug auf Straßen zurückgelegten Wegstrecken mit Hilfe einer Weg- und einer Geschwindigkeitsmeßeinrichtung ist gekennzeichnet durch einen Meßgeber für Lenkradbewegungen und einer Auswertungseinrichtung mit einer Vergleichseinrichtung für Geschwindigkeit und/oder Weg sowie Lenkbewegungen mit vorgegebenen Kriterien für diese Meßgröße zur Klassifizierung der Wegstrecken in verschiedene Kategorien.

Die Klassifizierung der Wegstrecken, beispielsweise in Fahrten in Ortschaften, Landstraßenfahrten und Autobahnfahrten, kann insbesondere zur Ermittlung einer von neuartigen Kriterien abhängigen Benutzungsgebühr verwendet werden.

## Beschreibung

Die Erfindung betrifft ein Gerät zum Ermitteln der mit einem Kraftfahrzeug auf Straßen zurückgelegten Wegstrecken mit Hilfe einer Weg- und einer Geschwindigkeitsmeßeinrichtung.

Es ist bekannt, die zurückgelegten Wegstrecken eines Kraftfahrzeugs zu Kontrollzwecken aufzuzeichnen. Hierfür werden die von einem Tachometer erstellten Daten für Zeit, Weg und Geschwindigkeit abgespeichert. Die Abspeicherung kann dabei in Form einer grafischen Aufzeichnung oder elektronisch erfolgen. Derartige Aufzeichnungen werden heute in erster Linie zur Einsatzkontrolle von Kraftfahrzeugen und ggfs. auch zur Fahrerkontrolle, insbesondere für Lkw-Fahrer eingesetzt.

Die vorliegende Erfindung geht von der Problemstellung aus, erweiterte Anwendungsmöglichkeiten für eine derartige Wegstreckenermittlung bereitzustellen.

Ausgehend von dieser Problemstellung ist ein Gerät der eingangs erwähnten Art erfindungsgemäß gekennzeichnet durch einen Meßgeber für Lenkradbewegungen und einer Auswertungseinrichtung mit einer Vergleichseinrichtung für Geschwindigkeit und/oder Weg sowie Lenkbewegungen mit vorgegebenen Kriterien für diese Meßgrößen zur Klassifizierung der Wegstrecken in verschiedene Kategorien.

Die Klassifizierung gerade befahrener oder zurückgelegter Wegstrecken kann unter Berücksichtigung der ermittelten Lenkbewegungen beispielsweise zur Unterscheidung des Fahrens in Wohngebieten in Ortschaften, in Ortsdurchfahrten, auf Landstraßen oder auf Autobahnen oder autobahnähnlichen Schnellstraßen dienen. Dabei ist es insbesondere hilfreich, die Länge der ohne wesentliche Lenkbewegung gefahrenen "geraden Strekken" zu ermitteln und/oder eine Auswertung der Art der gefahrenen Kurven aus Lenkbewegungen und Geschwindigkeiten vorzunehmen.

Eine Statistik über die von einem Fahrzeug zurückgelegten klassifizierten Wegstrecken kann in mehrerer Hinsicht nützlich sein. So ist es beispielsweise denkbar, den Wert eines Gebrauchtfahrzeugs dadurch genauer ermitteln zu können, daß bekannt ist, ob das Fahrzeug in erster Linie auf Autobahnen oder in erster Linie auf kurzen Fahrtstrecken benutzt worden ist, was bekanntlich ein wertbestimmender Einfluß für Gebrauchtfahrzeuge ist. Die Klassifikation der Wegstrecken kann ferner zu einer Wichtung der mit dem Fahrzeug zurückgelegten Entfernungen zur Festlegung von Inspektionsintervallen oder optimaler Ölwechselintervalle verwendet werden. Ferner ist es denkbar, die Klassifizierung der Wegstrecken zu verwenden, um nach neuen Kriterien Kraftfahrzeug-Versicherungsprämien, Kraftfahrzeugsteuern und ggf. Taxi- oder Mietwagengebühren festzulegen.

Mit der mit dem erfindungsgemäßen Gerät durchgeführten Klassifizierung der Wegstrecken ist es ferner möglich, Benutzungsgebühren für das Kraftfahrzeug zu erheben, die abhängig von der Art der zurückgelegten Wegstrecke - und damit abhängig von der durch die Kraftfahrzeugnutzung ausgeübten Belastung des Straßenverkehrs bzw. der Umwelt - ermittelt werden kann. Demgemäß kann das erfindungsgemäße Gerät eine Auswertungsstufe zur Ermittlung einer Gebühr entsprechend der ermittelten Kategorie der Wegstrecke aufweisen.

Da die Benutzungsgebühr ggfs. auch abhängig von der Zeit der Benutzung einer Straße sein kann, ist es zweckmäßig, wenn die Auswertungsstufe einen Eingang für eine Zeitangabe aufweist. Die Zeitangabe kann von einer im Kraftfahrzeug vorhandenen Uhr geliefert werden, die entweder nicht manipulierbar genau geht (z.B. als Funkuhr ausgebildet ist) oder so ausgebildet ist, daß sie regelmäßig nachgestellt werden kann, beispielsweise an Tankstellen.

Mit dem erfindungsgemäßen Gerät ist es auch denkbar, die Benutzungsgebühren drastisch zu erhöhen, wenn Benutzung bei ungünstigen Umweltbedingungen, beispielsweise unter smogbildenden Bedingungen stattfindet. Die Auswertungsstufe kann daher wenigstens einen Eingang für den Empfang von Umweltdaten aufweisen.

In dem erfindungsgemäßen Gerät werden sinnvollerweise gebührenrelevante Fahrzeugdaten abgespeichert, die beispielsweise mittels einer Chipkarte eingebbar sind, jedoch auch mit einem nicht zugänglichen Speicherbauteil bei Inbetriebnahme des Geräts eingegeben werden können.

Die Auswertung, insbesondere die Gebührenermittlung, kann bei dem erfindungsgemäßen Gerät ständig vorgenommen werden. Es ist aber auch möglich, die für die Auswertung relevanten Meßdaten in dem Gerät abzuspeichern und eine separate Auswertungsstufe für die Meßgrößen vorzusehen, die ggfs. auch physikalisch von dem im Fahrzeug befindlichen Geräteteil zur Aufnahme der Meßdaten getrennt sein kann.

Die Erfindung soll im folgenden anhand eines Ausführungsbeispiels mit Hilfe der beigefügten Zeichnung näher erläutert werden. Es zeigen:
- Figur 1: ein Beispiel für eine Fahrt, die eine Kurzstrecke sowie Strecken im Stadtverkehr, auf der Landstraße und auf der Autobahn umfaßt, dargestellt in einem Diagramm
- Figur 2: eine schematische Darstellung verschiedener Sensoren und Signalgeber sowie einer Auswertungsschaltung und einem Speicher zur Durchführung von Streckenklassifikationen
- Figur 3: ein Flußdiagramm zur Verdeutlichung der vorgenommenen Streckenklassifikation

Die Klassifikation der Wegstrecken kann vorzugsweise durch die Merkmale Geschwindigkeit, Kurvenbewegungen und Länge der geraden Strecken vorgenommen werden. Eine mögliche Klassifikation kann vorsehen:
∘ Innerorts (30 Km-Zone):
   - Geschwindigkeit:: in der Regel sehr gering (wg. Begrenzungsmaßnahmen).
   - Kurvenbewegungen:: überwiegend Kurven mit einem kleinen Radius.
   - Strecken:: kurze, gerade Strecken mit scharfen 90 Grad Kurven.
∘ Innerorts (50 Km Zone):
   - Geschwindigkeit:: in der Regel gering.
   - Kurvenbewegungen:: überwieged Kurven mit einem kleinen Radius.
   - Strecken:: überwiegend kurze, gerade Strecken mit scharfen 90 Grad Kurven.
∘ bei der Ortsdurchfahrt:
   - Geschwindigkeit:: in der Regel gering bis mittel.
   - Kurvenbewegungen:: überwiegend Kurven mit einem kleinen Radius.
   - Strecken:: teilweise längere, gerade Strecken bei Durchgangsstraßen.
∘ Landstraßen:
   - Geschwindigkeit:: mittel bis hoch.
   - Kurvenbewegungen:: kurvenreicher als Autobahnen, jedoch weniger Kurven als innerorts.
   - Strecken:: längere, gerade Strecken als innerorts.
∘ Autobahnen oder autobahnähnliche Schnellstraßen:
   - Geschwindigkeit:: hoch bis sehr hoch.
   - Kurvenbewegungen:: gekennzeichnet durch Kurven mit einem großen Radius, abgesehen von Abfahrten, die als Landstraße zählen.
   - Strecken:: lange, gerade Strecken ohne relevanter Kursänderung.

Die sich aus der Wegstreckenklassifikation ergebenden Strekkengebühren oder die hierfür ermittelten Meßdaten können in einem verplombten Gerät im Fahrzeug angesammelt und regelmäßig an einer geeigneten, autorisierten Stelle ausgelesen und danach abgerechnet werden. Außer einer standardisierten Datenschnittstelle mit der autorisierten Abrechnungsstelle benötigt das erfindungsgemäße Gerät keine externen Schnittstellen am Fahrzeug. Das Gerät kann ohne externe Hilfe an Bord des Fahrzeugs die gefahrene Strecke klassifizieren.

Dabei wird es zweckmäßig sein, den Streckentyp, die Streckenlänge und ggfs. auch Datum, Uhrzeit, Geschwindigkeit, Umweltdaten usw. zur späteren Auswertung in einem nicht flüchtigen Speicher abzulegen. Da die Auswertung nach Abschluß einer Wegstrecke erfolgt, kann während der Fahrten dann eine exakte Preisangabe nicht vorgenommen werden.

Es ist alternativ auch denkbar, den Streckentyp, die Streckenlänge usw. sofort in eine Gebühr umzurechnen und die Gebühr (aus Kontrollgründen ggfs. zusammen mit den Ausgangsdaten) in einem nicht flüchtigen Speicher abzulegen.

Beispiele einiger typischer Abrechnungszeilen sind:

| | | |
|---|---|---|
| -Kurzstrecke (mit Längen < 3 Km) | je Strecke DM 1,00 | 12 * DM 1,00 |
| -nachts innerorts zurückgelegt | (zwischen 19:00-6:30): | 212 Km * DM 0,03 |
| -tagsüber innerorts zurückgelegt | (zwischen 8:30-15:30): | 434 Km * DM 0,10 |
| -innerorts in Stoßzeiten zurückgelegt | (z.B. zwischen 6:30-8:30): | 66 Km * DM 0,25 |
| -auf Landstraßen zurückgelegt: | | 212 Km * DM 0,15 |
| -auf Autobahnen am Wochenende zurückgelegt: | | 888 Km * DM 0,20 |
| -Schnelle (> 130 kmh) Autobahnfahrt bei Smogbedingung i.d. Urlaubszeit: | | 39 Km * DM 0,40 |

Die gebührenrelevanten Fahrzeugdaten (Kraftfahrzeug mit oder ohne geregelten Katalysator usw.) können einmalig im nichtflüchtigen Speicher an Bord des Fahrzeugs einprogrammiert und bei Änderungen aktualisiert werden.

Zur Erfassung der Lenkungsbewegungen kann ein relativ einfaches und kostengünstiges Winkelmeßgerät an der Lenkachse befestigt werden, das jedenfalls bei einem serienmäßigen Einbau zuverlässig und nicht leicht manipulierbar ist.

Datum und Uhrzeit werden in einer nicht manipulierbaren Systemuhr an Bord des Fahrzeuges ausgegeben. Ggfs. können Standort, Datum und Uhrzeit bei der Abrechnung an einer Tankstelle automatisch aktualisiert werden, so daß eine Funkuhr ggfs. entfallen kann.

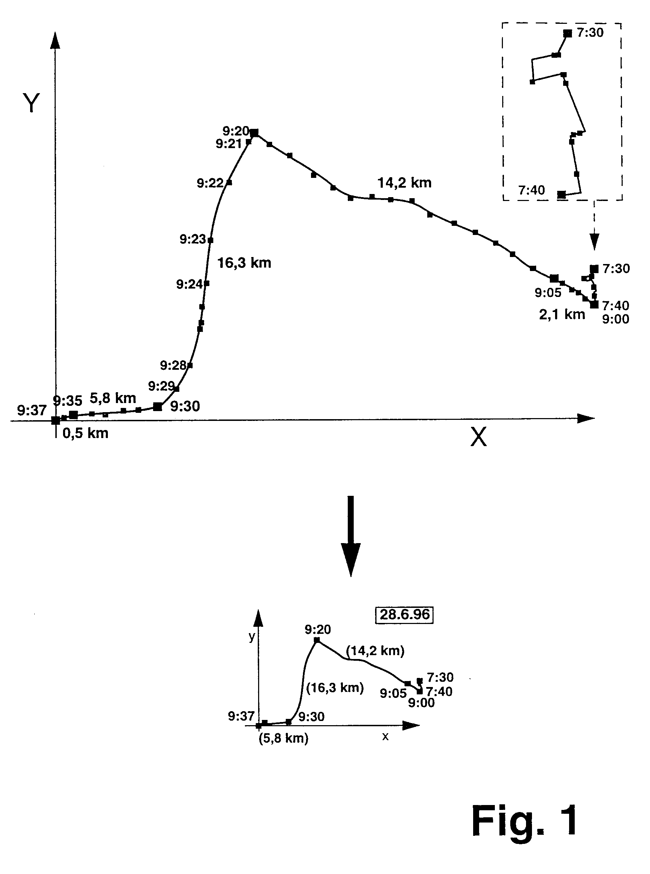

Figur 1 zeigt ein Beispiel für eine Fahr, die aufgrund der Lenkbewegungen und des Anteils der geraden Strecken in Teilstrecken klassifiziert werden kann, wie unten noch näher erläutert wird. Die Gesamtlänge der Wegstrecke beträgt 40,8 km und kann mit den ermittelten Parametern, nämlich Zeit, Geschwindigkeit, Wegstrecke, Lenkbewegungen, Länge der geraden Strecken abgespeichert und einer Auswertung zur Klassifizierung zugeführt werden.

Figur 1a verdeutlicht die Bewegung des Fahrzeugs in einer X-Y-Ebene, wobei die in zeitlichen Abständen ermittelten Wertepaare eingezeichnet sind.

Figur 1b zeigt eine vergrößerte Darstellung für eine zurückgelegte Kurzstrecke am Beginn der Fahrt, die am Ende der Kurzstrecke unterbrochen worden ist. Figur 1c verdeutlicht Parameterangaben, die aus Figur 1a ermittelt worden sind und zur Abspeicherung benutzt werden, um die abgespeicherten Daten zu reduzieren. Es werden dabei nur noch die Eckwerte für erkannte Streckenabschnitte abgespeichert.

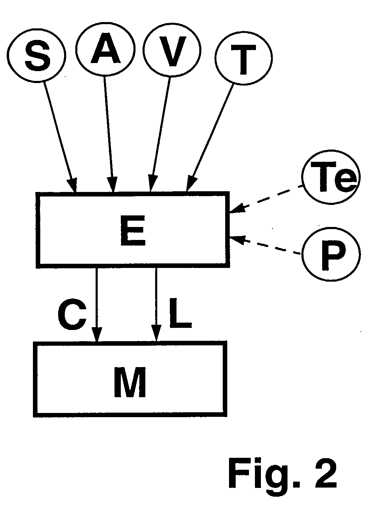

Figur 2 zeigt schematisiert einen Zeitgeber T, einen Sensor für die momentane Geschwindigkeit V, einen Sensor für die zurückgelegte Wegstrecke S und einen Sensor für die Lenkbewegungen A des Fahrzeugs, die beispielsweise aus Änderungen der Winkelstellung des Lenkrades ermittelt werden können. Die Ausgangssignale dieser Stufen gelangen auf eine Auswertungsschaltung E, in der die Klassifikation der Wegstrecken vorgenommen wird und aus der beispielsweise Ausgangssignalpaare für die jeweilige Klassifikation der Wegstrecke C und der zugehörigen zurückgelegten Wegstrecke L in einen Speicher M ausgegeben werden.

Die erfindungsgemäß vorgenommene Klassifizierung der Wegstrecken kann für eine Gebührenermittlung insbesondere auch durch Umstände beeinflußt werden, die eine Fahrt besonders umweltbelastend machen und daher mit höheren Gebühren belastet werden sollte. Die Berechnung einer Streckengebühr kann insbesondere unter Berücksichtigung der Ozonbelastung erfolgen. Aus technischer Sicht sollte dabei nicht so sehr die aktuelle Ozonkonzentration sondern vielmehr die voraussichtliche zukünftige Ozonkonzentration für den nächsten Tag bzw. die nächsten Tage berücksichtigt werden.

Als Parameter für die Berechnung der Streckengebühr wird daher die mutmaßliche Entwicklung der Ozonkonzentration als Funktion der Temperatur und des Luftdrucks herangezogen, so daß an die Auswertungsschaltung E noch ein Sensor für die Temperatur Te und ein Sensor für den Luftdruck P angeschlossen sein können, wie dies Figur 2 zeigt.

Die unangenehm hohe Ozonkonzentration tritt in der Regel auf bei Hochdruckwetterlage und bei gleichzeitiger Temperatur über 30 Grad Celsius. Autofahrten kurz (bis 24 Stunden) vor Erreichen dieser Umweltbedingung tragen mit ihren Abgaben bei zu den physikalischen und chemischen Randbedingungen der Ozonentwicklung und sollen deshalb mit einer höheren Gebühr belastet werden. Dazu werden gemäß dieser Erfindung die Temperatur und Luftdruck in den 24 Stunden vor einer Fahrt registriert und als Funktion der Zeit in einem Bordrechner gespeichert. Diese Erfassung findet ständig, d.h. auch beim stillstehenden Fahrzeug statt.

Bei (stark) steigenden Luftdruck in einem stehenden Fahrzeug ist mit einer Hochdruckwetterlage in den nächsten Tagen zu rechnen. Falls die Umgebungstemperatur in einem 24 Stunden Intervall bei einer solchen Hochdruckwetterlage über einer Temperaturschwelle (z.B. 30 Grad) ansteigt ist jede Fahrt in oder direkt nach diesem 24 Stunden Intervall mit einer höheren Gebühr zu belasten. Bei (stark) fallenden Luftdruck in einem stehenden Fahrzeug ist unabhängig von der Umgebungstemperatur mit einem Wettersturz mit Niederschlag und starkem Wind in den nächsten Tagen zu rechnen. In einer solchen Tiefdruckwetterlage ist jede Fahrt in oder direkt nach diesem 24 Stunden Intervall mit einer normalen/niedrigeren Gebühr zu belasten.

Bei einer maximalen Umgebungstemperatur unterhalb der Temperaturschwelle (z.B. 30 Grad) im betreffenden 24-Stunden Intervall vor Fahrtantritt ist unabhängig von der Luftdruckänderung keine Ozonbelastung zu befürchten: Es wird dann der Normaltarif angesetzt.

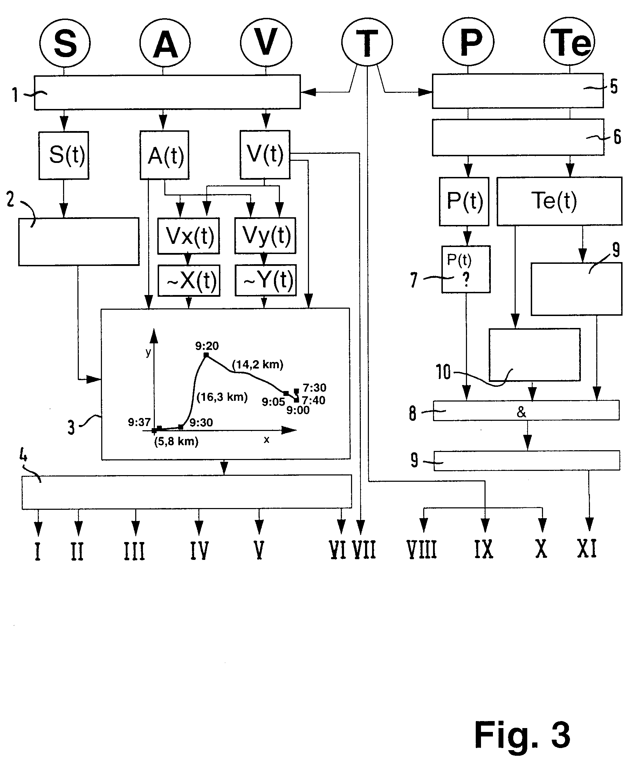

Ein Auswertungsbeispiel ist in dem Flußdiagramm gemäß Figur 3 dargestellt. Die Ausgangssignale des Sensors S für die zurückgelegte Wegstrecke, des Sensors A für die Lenkbewegungen und des Sensors V für die momentane Geschwindigkeit gelangen zusammen mit dem Ausgangssignal des Zeitgbers T in eine Digitalisierungs- und Speicherstufe 1. Mit den digitalisierten Werten werden die jeweilige Werte S (t), A (t) und V (t) gebildet, um so den zeitlichen Verlauf der gemessenen Werte auswerten zu können. Der Wegstreckenverlauf S (t) wird in einer Transformationsstufe 2 in einen geeichten Maßstab überführt und einer Nachbildungsstufe 3 für die zurückgelegten Wegstrecken übermittelt. Die Nachbildungsstufe 3 erhält ferner die Signalverläufe A (t) und V (t). Unter Berücksichtigung der Lenkbewegungen A (t) und der Geschwindigkeiten V (t) werden die Geschwindigkeitskomponenten Vx (t) und Vy (t) errechnet und hieraus Ortskoordinaten X (t) und Y (t) angenähert ermittelt, so daß in der Nachbildungsstufe 3 nunmehr alle Daten zur Verfügung stehen, um den Verlauf der gefahrenen Strecke nachzubilden. In dem dargestellten Ausführungsbeispiel entspricht die nachgebildete Strecke der Strecke gemäß Figur 1a bzw. 1c nach Ermittlung der relevanten Eckdaten.

Unter Verwendung der genannten ermittelten Parameterverläufe wird in einer Streckenklassifizierungsstufe 4 eine Klassifizierung in durch Pausen unterbrochene Teilstrecken I sowie Strekkenarten II bis VI vorgenommen und eine entsprechende Tabelle gebildet. In die Tabelle geht das Zeitsignal des Zeitgebers T zur Bildung verschiedener Tabellenspalten VII, VIII und IX und X direkt ein.

Zur Ermittlung eines relevanten hohen Ozonrisikos werden auch die Ausgangssignale des Sensors P für den Luftdruck und des Sensors Te für die Temperatur zusammen mit dem Zeitsignal des Zeitgebers T einer Digitalisierungs- und Speicherstufe 5 zugeführt. In einer Prüfstufe 6 wird eine Plausibilitätsprüfung für die Meßwerte vorgenommen. Anschließend wird der zeitliche Verlauf der Meßwerte P (t) und Te (t) gebildet. Der Werteverlauf P (t) wird einer Entscheidungsstufe 7 zugeführt, in der festgestellt wird, ob der Luftdruck aktuell ansteigt. Ist dies der Fall, wird ein entsprechendes Entscheidungssignal einer UND-Stufe 8 zugeführt. Der Werteverlauf Te (t) wird zwei Entscheidungsstufen 9, 10 zugeführt. In der Entscheidungsstufe 9 wird geprüft, ob die Bedingung erfüllt ist, daß die Temperatur für maximal 24 Stunden über 33° C liegt. Ist dies der Fall, wird ein entsprechendes Entscheidungssignal der UND-Stufe 8 zugeführt.

Die zweite Entscheidungsstufe 10 überprüft, ob die Temperatur für mindestens 24 Stunden über 25° lag. Auch dieses Entscheidungssignal wird der UND-Stufe zugeführt. Ist eine der Temperaturbedingungen gemäß den Entscheidungsstufen 9, 10 erfüllt und steigt der Luftdruck gemäß der Entscheidungsstufe 7 an, ergibt sich aus der UND-Stufe 8 ein Ausgangssignal, das in der Erkennurgsstufe 9 als "hohes Ozonrisiko" erkannt wird. Hieraus bildet die Entscheidungsstufe 9 einen entsprechenden Tabellenwert XI.

Die für das Ausführungsbeispiel gemäß Figur 1 in der Auswertung gemäß Figur 3 erstellte Tabelle ist nachstehend wiedergegeben.

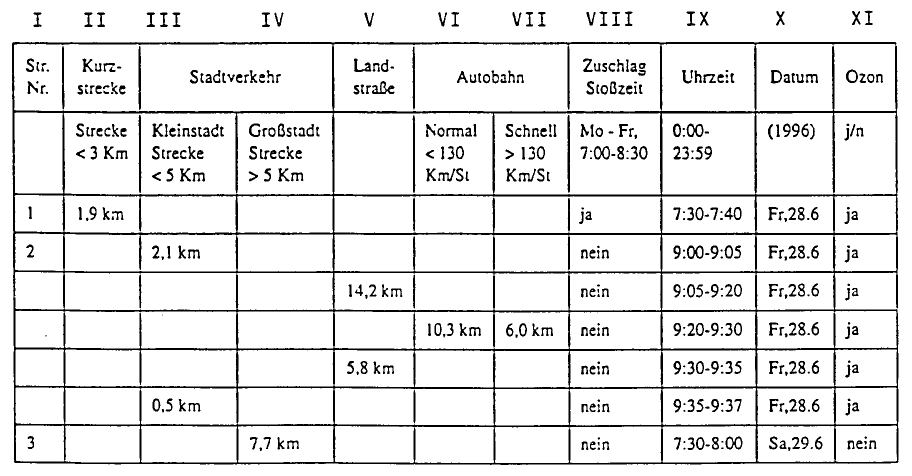

Die Tabelle weist aus, daß die erste Fahrt zwischen 7.30 Uhr und 7.40 Uhr am 28.06. eine Kurzstrecke war, die innerhalb einer Stoßzeit unter hohen Ozonrisiko durchgeführt worden ist.

Die zweite Teilstrecke am 28.06. zwischen 9.00 Uhr und 9.37 Uhr führte zunächst mit einer kurzen Stadtfahrt ("Kleinstadt") mit einer Länge von 2,1 km aus der Stadt heraus und ging in eine Landstraßenfahrt über 14,2 km über. Anschließend folgte eine Autobahnfahrt von insgesamt 16,3 km, von denen 10,3 km mit einer Geschwindigkeit unter 130 km/h und 6,0 km mit einer Geschwindigkeit von über 130/h zurückgelegt worden sind. Anschließend erfolgte eine Landstraßenstrecke von 5,8 km und eine kurze Stadtfahrt von 0,5 km zum Ziel.

Die dritte Strecke, die in die Tabelle eingetragen ist, findet sich nicht in der Figur 1 sondern stellt eine angenommene Fahrt als "Großstadtstrecke" am 29.06. zwischen 7.30 Uhr und 8.00 Uhr dar.

## Patentansprüche

1. Gerät zum Ermitteln der mit einem Kraftfahrzeug auf Straßen zurückgelegten Wegstrecken mit Hilfe einer Weg- und einer Geschwindigkeitsmeßeinrichtung, **gekennzeichnet durch** einen Meßgeber für Lenkradbewegungen und einer Auswertungseinrichtung mit einer Vergleichseinrichtung für Geschwindigkeit und/oder Weg sowie Lenkbewegungen mit vorgegebenen Kriterien für diese Meßgröße zur Klassifizierung der Wegstrecken in verschiedene Kategorien.

2. Gerät nach Anspruch 1, gekennzeichnet durch eine Auswertung der Länge der Strecken ohne wesentliche Lenkbewegungen als "gerade Strecken".

3. Gerät nach Anspruch 1 oder 2, gekennzeichnet durch eine Auswertung der Art der gefahrenen Kurven aus Lenkradbewegungen und Geschwindigkeit.

4. Gerät nach einem der Ansprüche 1 bis 3, gekennzeichnet durch eine Auswertungsstufe zur Ermittlung einer Gebühr entsprechend der ermittelten Kategorie der Wegstrecke.

5. Gerät nach Anspruch 4, gekennzeichnet durch einen Eingang der Auswertungsstufe für eine Zeitangabe.

6. Gerät nach Anspruch 4 oder 5, gekennzeichnet durch wenigstens einen Eingang der Auswertungstufe für ermittelte Umweltdaten.

7. Gerät nach einem der Ansprüche 4 bis 6, gekennzeichnet durch einen Speicher für gebührenrelevante Fahrzeugdaten.

8. Gerät nach Anspruch 7, gekennzeichnet durch einen Kartenleser für die relevanten Fahrzeugdaten.

9. Gerät nach einem der Ansprüche 1 bis 8, gekennzeichnet durch eine Speicherstufe zur Abspeicherung aller relevanter Meßgrößen und durch eine separate Auswertungsstufe für die Meßgrößen.
